# EUROPÄISCHE PATENTSCHRIFT

(11) **EP 1 128 108 B1**
(45) Veröffentlichungstag und Bekanntmachung des Hinweises auf die Patenterteilung: **01.03.2006**
(21) Anmeldenummer: 00128588.1
(22) Anmeldetag: 27.12.2000
(51) Int. Cl.: F16K 27/06, E03B 7/07

(54) **Sanitäranschlusseinrichtung**
Sanitary connection device
Dispositif de raccordement sanitaire

(30) Priorität: 21.02.2000 DE 20003138 U
(43) Veröffentlichungstag der Anmeldung: 29.08.2001
(73) Patentinhaber: HANSA METALLWERKE AG, 70567 Stuttgart (DE)
(72) Erfinder: Assenmacher, Bernd, 70597 Stuttgart (DE)
(74) Vertreter: Ostertag, Ulrich

(56) Entgegenhaltungen:
- CH-A- 332 258
- DE-B- 1 272 659
- GB-A- 1 175 306
- US-A- 974 409
- US-A- 3 760 836
- US-A- 3 815 871
- US-A- 4 176 689

## Beschreibung

Die Erfindung betrifft eine S-Anschlußeinrichtung zum Anschließen einer Sanitärarmatur an eine Gebäude-Versorgungsleitung mit einem Einlaß, einem Auslaß und einem im Strömungsweg zwischen diesen angeordneten Absperrventil, welches so angeordnet ist, daß bei geschlossenem Absperrventil der Strömungsweg zwischen stumpfwinklig aufeinandertreffenden Strömungswegabschnitten unterbrochen wird.

Eine derartige S-Anschlußeinrichtung ist aus der DE-AS 1 272 659 bekannt. Die genannte Anordnung des Absperrventils zwischen stumpfwinklig angeordneten Strömungswegabschnitten dient dazu, das Absperrventil in eine möglichst kompakt aufgebaute S-Anschlußeinrichtung zu integrieren, so daß deren Platzbedarf gering ist.

Aus der US-A-4 176 689 ist ein Ventil bekannt, welches unter einem stumpfen Winkel gegeneinander geneigte Anschlußstutzen umfaßt. In einem letztere verbindenden Gehäuseabschnitt ist ein drehbares Küken angeordnet, welches um eine zur Achse des einen Anschlußsstutzens senkrechte Achse mittels eines Hebels drehbar ist, der mit einer Kükenwelle zusammenarbeitet, die dicht durch den Gehäuseabschnitt nach außen hindurchgeführt ist. Eine Steuerbohrung des Kükens hat einen lichten Durchmesser, der etwa der Hälfte des lichten Durchmessers der Anschlußstutzen entspricht.

Bei der S-Anschlußeinrichtung der DE-AS 1 272 659 ist das Absperrventil als Kugelventil ausgebildet, das beim Absperren mit einem Ventilsitz zusammenarbeitet. Der Ventilsitz ist als Durchgangsbohrung in der S-Anschlußeinrichtung ausgebildet. Eine derartige Ausgestaltung des Absperrventils führt auch bei vollständig geöffnetem Absperrventil zu einem relativ zerklüfteten Strömungskanal innerhalb der S-Anschlußeinrichtung, wodurch verstärkt Strömungsgeräusche bei der Wasserentnahme aus der Sanitärarmatur erzeugt werden. Außerdem findet eine erhebliche Drosselung des Wasserstromes statt.

Es ist daher die Aufgabe der vorliegenden Erfindung, eine S-Anschlußeinrichtung der eingangs genannten Art derart weiterzubilden, daß Strömungsgeräusche und Drosselung verringert werden.

Diese Aufgabe wird erfindungsgemäß dadurch gelöst, daß das Absperrventil umfaßt: ein drehbares Hahnküken mit einer Einlaßöffnung und einer Auslaßöffnung, wobei die Einlaßöffnung und die Auslaßöffnung im wesentlichen die gleichen Durchmesser aufweisen wie die den Öffnungen benachbarten Strömungswegabschnitte, und eine von außen zugängliche und gegen den Strömungsweg abgedichtete Verdreheinrichtung für das Hahnküken.

Diese Ausgestaltung des Absperrventils gewährleistet insbesondere bei vollständiger Öffnung einen glatteren Übergang zwischen den Strömungswegabschnitten im Bereich des Absperrventils. Zusätzlich ist der Strömungsweg im Bereich des geöffneten Absperrventils nicht enger als in den benachbarten Strömungswegabschnitten. Dies führt insgesamt zu einer weniger turbulenten Strömung in der S-Anschlußeinrichtung und damit zu geringerer Strömungsgeräuschausbildung sowie zu einem niedrigen Strömungswiderstand.

Das Hahnküken kann kegelförmig sein. In diesem Falle ist eine besonders elegante Integration des Absperrventils in den Strömungsweg der S-Anschlußeinrichtung realisierbar, bei der sich ein Bereich des Kegelmantels des Hahnkükens gegen die Innenwandung des Strömungswegs der S-Anschlußeinrichtung abstützt und ein radial gegenüberliegender Bereich des Kegelmantels eine durch Verdrehen des Hahnkükens ggf. verschließbare Ventilöffnung im Übergangsbereich der stumpfwinklig aufeinandertreffenden Strömungswegabschnitte aufweist.

Bei einer vorteilhaften Ausgestaltung der Neuerung weist das Hahnküken eine von außen zugängliche Eingriffseinrichtung auf, an die ein Drehwerkzeug zum Drehen des Hahnkükens ansetzbar ist. Das Drehwerkzeug ist dabei nicht notwendigerweise Bestandteil des Absperrventils, sondern kann bei Bedarf angesetzt und wieder abgenommen werden, wodurch eine nochmals kompaktere S-Anschlußeinrichtung realisiert wird.

Die Eingriffseinrichtung kann eine Rasteinrichtung aufweisen, die zum lösbaren Verriegeln mit dem Drehwerkzeug ausgebildet ist. Eine derartige Rasteinrichtung kann mehreren Zwecken dienen: Das Drehwerkzeug kann durch die Rasteinrichtung in seiner Verdrehposition gesichert werden. Bei Ausführungsformen, bei denen das Drehwerkzeug einen integralen Bestandteil des Absperrventils bildet, kann durch die Rasteinrichtung das Hahnküken in seiner Position im Gehäuse der S-Anschlußeinrichtung gesichert werden, so daß zusätzliche Positioniermaßnahmen, etwa durch entsprechende Ausgestaltung der Innenfläche des Strömungswegs, entfallen.

Wenn die Eingriffseinrichtung gegen den Strömungsweg abgedichtet ist, führt ein Abnehmen des Drehwerkzeugs nicht zu einem unerwünschten Wasseraustritt.

Alternativ zum Ansetzen über eine Eingriffseinrichtung kann ein Drehwerkzeug zum Drehen des Hahnkükens auch drehfest mit dem Hahnküken umspritzt sein. Auf diese Weise bildet das Drehwerkzeug eine integrale Verdreheinrichtung für das Hahnküken. Die Spritz-Verbindung zwischen Drehwerkzeug und Hahnküken kann auf einfache Weise wasserdicht ausgeführt sein.

Die Verdreheinrichtung kann an der Kegelspitze des Hahnkükens angreifen. Eine derartige Ausgestaltung erleichtert die Abdichtung der Verdreheinrichtung gegen den Strömungsweg.

Bevorzugt ist die Drehachse des Hahnkükens gegen die Achse des Einlasses der S-Anschlußeinrichtung um einen Winkel geneigt, der geringer ist als 45°. Die Drehachse ist damit der Achse der S-Anschlußeinrichtung relativ eng benachbart, was bei beengten Platzverhältnissen bei der Installation der Sanitärarmatur von Vorteil ist. Das Drehwerkzeug kann dann so ausgebildet sein, daß zum Verstellen des Absperrventils nur wenig Platz erforderlich ist.

Ein Ausführungsbeispiel der Erfindung wird nachfolgend anhand der Zeichnung näher erläutert; es zeigen:
- Figur 1: eine Seitenansicht einer S-Anschlußeinrichtung für eine Sanitärarmatur;
- Figur 2: einen Schnitt gemäß Linie II-II von Figur 1;
- Figur 3: eine Ansicht eines Hahnkükens eines Absperrventils der S-Anschlußeinrichtung;
- Figur 4: einen Schnitt gemäß Linie IV-IV von Figur 3;
- Figur 5: eine Ansicht eines Drehhebels zur Verdrehung des Hahnkükens; und
- Figur 6: eine Seitenansicht des Drehhebels von Figur 5.

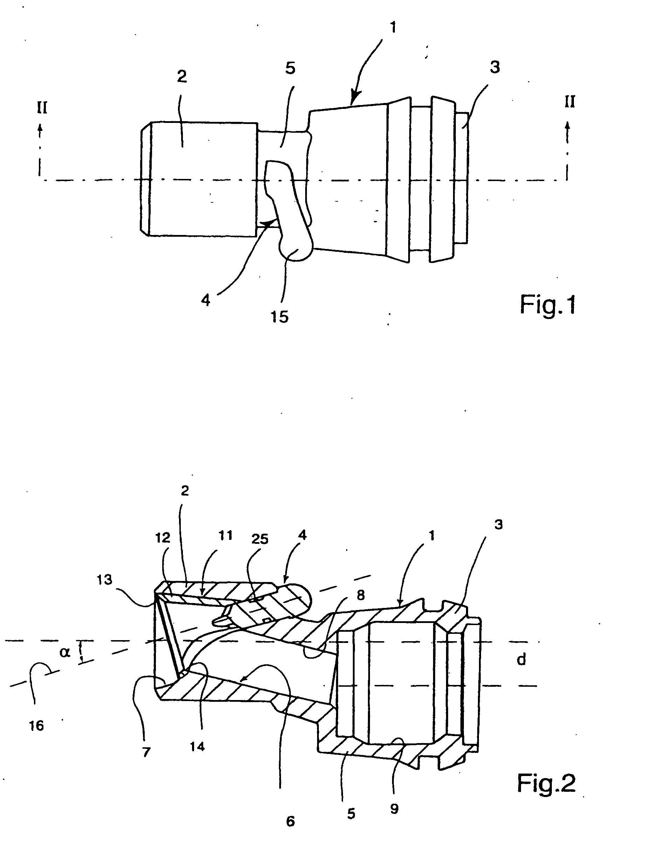

Die in den Figuren 1 und 2 insgesamt mit dem Bezugszeichen 1 versehene S-Anschlußeinrichtung dient zum Ausgleich von Stichmaßtoleranzen bei der Installation einer Sanitärarmatur. Sie weist einen Einlaßstutzen 2 auf, der bei installierter S-Anschlußeinrichtung 1 mit einer Gebäude-Versorgungsleitung (nicht dargestellt) verbunden ist. Weiterhin hat die S-Anschlußeinrichtung 1 einen Auslaßstutzen 3, der bei installierter S-Anschlußeinrichtung 1 an eine Sanitärarmatur (nicht dargestellt) angeschlossen ist. Zum Öffnen und Schließen eines noch zu beschreibenden Absperrventils weist die S-Anschlußeinrichtung 1 einen Drehhebel 4 auf, von dem in der Darstellung der Figur 1 hauptsächlich der aus einem Gehäuse 5 der S-Anschlußeinrichtung 1 herausragende Bediengriff 15 zu sehen ist. Das Gehäuse 5 ist aus Messing.

In der Schnittdarstellung von Figur 2 ist der Strömungsweg 6 im Inneren der S-Anschlußeinrichtung 1 dargestellt. In Strömungsrichtung gesehen weist der Strömungsweg 6 zunächst im Einlaßstutzen 2 einen einlaßseitigen Strömungswegabschnitt 7 auf, der stromabwärts unter einem stumpfen Winkel in einen mittleren Strömungswegabschnitt 8 übergeht. Mit einem entsprechend gegensinnigen stumpfen Winkel geht der mittlere Strömungswegabschnitt 8 in einen auslaßseitigen Strömungswegabschnitt 9 über, so daß die Achsen des Einlaßstutzens 2 und des Auslaßstutzens 3 um einen Abstand d (vgl. die Ansicht der Figur 2) versetzt sind.

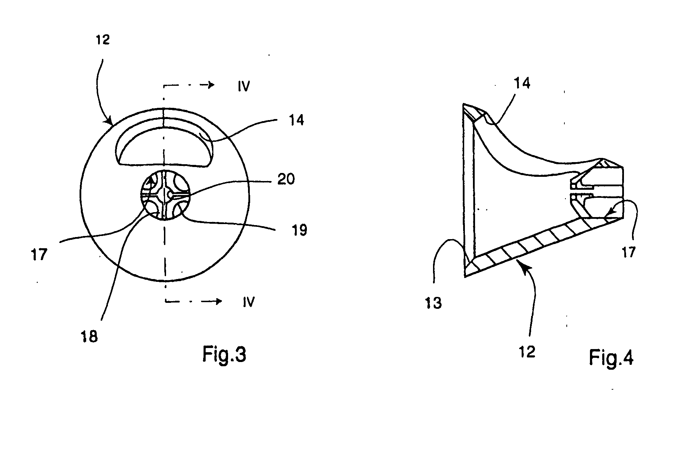

Im Übergangsbereich zwischen dem einlaßseitigen Strömungswegabschnitt 7 und dem mittleren Strömungswegabschnitt 8 ist das Absperrventil 11 angeordnet. Dieser weist ein als Kunststoff-Spritzteil (z.B. aus dem Material POM) hergestelltes Hahnküken 12 auf, das die Grundform eines Hohlkegels hat und in den Figuren 3 und 4 gezeigt ist. Der offene Boden dieser Kegelform bildet eine Einlaßöffnung 13, die in ihren Abmessungen dem Durchmesser des einlaßseitigen Strömungswegabschnitts 7 entspricht. Eine Durchgangsbohrung im Mantel der Kegelform bildet eine Auslaßöffnung 14 des Hahnkükens 12, die in ihren Abmessungen dem Durchmesser des mittleren Strömungswegabschnitts 8 entspricht. Das Hahnküken 12 ist im Gehäuse 5 drehbar, wobei der dem stumpfwinklig abknickenden mittleren Strömungsabschnitt 8 entfernt liegende Bereich des Kegelmantels des Hahnkükens 12 an der Innenwand des einlaßseitigen Strömungswegabschnitts 7 anliegt. Die Drehachse 16 des Hahnkükens 12 ist dabei gegen die Achse des Einlaßstutzens 2 um einen-Winkel-α von ca. 15 ° geneigt.

Zur Verdrehung des Hahnkükens 12 des Absperrventils 11 um die Drehachse 16 dient der ebenfalls als Kunststoff-Spritzteil hergestellte Drehhebel 4, der durch eine Durchgangsbohrung 25 im Gehäuse 5 geführt ist.

Der Drehhebel 4 steht drehschlüssig mit dem Hahnküken 12 in Eingriff. Das Hahnküken 12 weist hierzu im Bereich der Spitze seiner Kegelform eine Eingriffsöffnung 17 auf (vgl. Figuren 3 und 4). In die Eingriffsöffnung 17 ragen vier um 90 ° versetzte Materialbögen 18 derart, daß vier Eingriffsausnehmungen 19 und eine zentrale kreuzförmige Führungsöffnung 20 begrenzt werden. Je eine Eingriffsausnehmung 19 wird dabei von einem Materialbogen 18 und einem benachbarten Abschnitt des Kegelmantels des Hahnkükens 12 begrenzt.

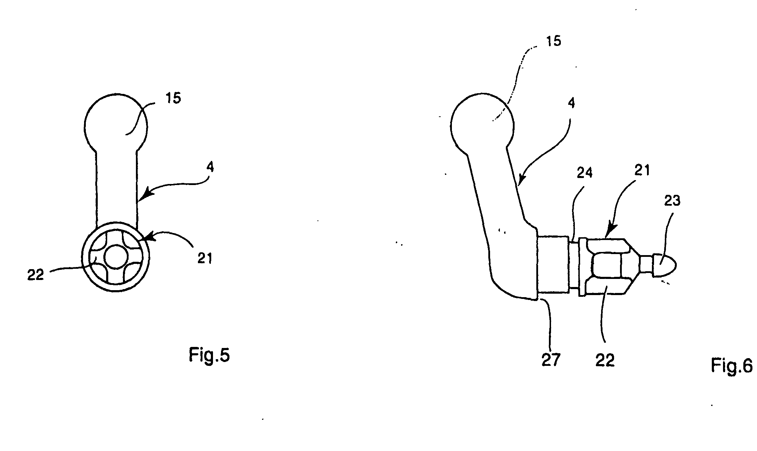

Zur Eingriffsöffnung 17 korrespondierend ist ein Eingriffskopf 21 des Drehhebels 4 ausgeformt (vgl. Figuren 5 und 6). Dieser weist vier um 90 ° zueinander versetzt angeordnete radiale Eingriffsflügel 22 auf, deren Querschnittsform der Form der Eingriffsausnehmungen 19 im Hahnküken 12 entspricht. Der Eingriffskopf 21 läuft an seiner Spitze in einer sich zunächst stufenförmig erweiternden und dann kuppelförmig auslaufenden Rastnase 23 aus.

In Richtung zum stumpfwinklig an den Eingriffskopf 21 angeformten Bediengriff 15 weist der Drehhebel 4 hinter dem Eingriffskopf 21 eine Umfangsnut 24 auf, die zur Aufnahme einer Dichtung (nicht dargestellt) vorgesehen ist, die den montierten Drehhebel 4 gegen die Durchgangsbohrung 25 im Gehäuse 5 der S-Anschlußeinrichtung 1 abdichtet. In der montierten Position wirkt eine Umfangsstufe 27 am Drehhebel 4 (vgl. Fig._6) als Gehäuseanschlag.

Die Montage des Drehhebels 4 in die S-Anschlußeinrichtung 1 ist wie folgt:

Der Drehhebel 4 wird zunächst in die Bohrung 25 im Gehäuse 5 bis zur Umfangsstufe 27 eingeführt. Anschließend wird der Eingriffskopf 21 des Drehhebels 4 in die Eingriffsöffnung 17 des Hahnkükens 12 gedrückt. Dabei durchtritt die Rastnase 23 des Eingriffskopfs 21 die Führungsöffnung 20, wobei die kuppelförmige Spitze der Rastnase 23 den Zentralbereich der Führungsöffnung 20 zunächst weitet und die vier Materialbögen 18 elastisch nachgeben. Der Eingriffskopf 21 wird soweit in die Eingriffsöffnung 17 eingeführt, bis die Materialbögen 18 in die stufenförmige Verengung hinter der Rastnase 23 einrasten. Dadurch ist eine Sicherung des Drehhebels 4 gegen ein axiales Herausrutschen aus dem Gehäuse 5 gewährleistet. Gleichzeitig hält diese Sicherung das Hahnküken 12 in Position im Gehäuse 5.

Beim Einführen des Eingriffskopfs 21 in die Eingriffsöffnung 17 gleiten gleichzeitig die Eingriffsflügel 22 in die dazu komplementären Eingriffsausnehmungen 19, so daß eine drehschlüssige Verbindung des Drehhebels 4 mit dem Hahnküken 12 zum Öffnen bzw. Schließen des Absperrventils 11 gewährleistet ist.

Bei einer nicht dargestellten alternativen Ausführungsform der drehfesten Befestigung des Drehhebels am Hahnküken wird das Hahnküken um einen Spritzabschnitt des Drehhebels, der bei dieser Ausführungsform aus Messing ist, herumgespritzt. Der Spritzabschnitt weist im Bereich der Spritz-Verbindung eine Konturierung seiner Mantelfläche, z.B. in Form axial verlaufender Lamellen auf, sodaß die Drehfestigkeit der Spritz-Verbindung bezüglich eines Verdrehens des Drehhebels gewährleistet ist.

Zur Erleichterung der Montage der Spritzabschnitt und Hahnküken umfassenden Einheit mit dem Gehäuse der S-Anschlußeinrichtung kann bei dieser Ausführungsform vorgesehen sein, daß der Bediengriff des Drehhebels mit dem Spritzabschnitt senkrecht zur Drehachse schwenkbar, ggf. auch aufsteckbar verbunden ist.

Die S-Anschlußeinrichtung 1 funktioniert folgendermaßen:

Bei der Installation der Sanitärarmatur werden durch Verdrehung der S-Anschlußeinrichtung 1 um den an der Gebäude-Versorgungsleitung befestigten Einlaßstutzen 2 und durch entsprechende Orientierung des von der S-Anschlußeinrichtung 1 erzeugten Parallelversatzes des Leitungswegs (vgl. Abstand d in Fig. 2) Stichmaßtoleranzen zwischen den Gebäude-Versorgungsleitungen und der Sanitärarmatur ausgeglichen. Zum Absperren der S-Anschlußeinrichtung 1 wird das Absperrventil 11 aus der in Figur 2 gezeigten Offenstellung durch Verdrehung des Drehhebels 4 um die Drehachse 16 um ca. 180 ° in eine Stellung gebracht, in der der Strömungsweg 6 zwischen dem einlaßseitigen Strömungswegabschnitt 7 und dem mittleren Strömungswegabschnitt 8 durch den Kegelmantel des Hahnkükens 12 vollständig verschlossen und damit abgesperrt wird.

Aufgrund des Absperrventils 11 übernimmt die S-Anschlußeinrichtung 1 z. B. die Funktion eines Eckventils mit. Wartungsarbeiten an der Sanitärarmatur oder deren Demontage können erfolgen, ohne daß die Wasserzufuhr über ein Absperrventil in der Gebäude-Versorgungsleitung unterbrochen werden muß.

Bei offenem Absperrventil 11 sind bei einer Wasserentnahme aus der Sanitärarmatur die Strömungsgeräusche aufgrund des kleinen Strömungswiderstandes in der S-Anschlußeinrichtung 1 gering.

Zur definierten Vorgabe der Offen- und der Schließstellung, des Absperrventils kann die S-Anschlußeinrichtung entsprechende Anschläge aufweisen, die die Verdrehbarkeit des Drehhebels begrenzen.

## Patentansprüche

1. S-Anschlußeinrichtung zum Anschließen einer Sanitärarmatur an eine Gebäude-Versorgungsleitung mit einem Einlaß (2), einem Auslaß (3) und einem im Strömungsweg zwischen diesen angeordneten Absperrventil (11), welches so angeordnet ist, daß bei geschlossenem Absperrventil (11) der Strömungsweg zwischen stumpfwinklig aufeinandertreffenden Strömungswegabschnitten unterbrochen wird,
**dadurch gekennzeichnet, daß**
das Absperrventil (11) umfaßt: ein drehbares Hahnküken (12) mit einer Einlaßöffnung (13) und einer Auslaßöffnung (14), wobei die Einlaßöffnung (13) und die Auslaßöffnung (14) im wesentlichen die gleichen Durchmesser aufweisen wie die den Öffnungen (13, 14) benachbarten Strömungswegabschnitte (7, 8); und eine von außen zugängliche und gegen den Strömungsweg (6) abgedichtete Verdreheinrichtung (4, 17) für das Hahnküken (12).

2. S-Anschlußeinrichtung nach Anspruch 1, **dadurch**
**gekennzeichnet, daß** das Hahnküken (12) kegelförmig ist.

3. S-Anschlußeinrichtung nach Anspruch 1 oder 2,
**dadurch gekennzeichnet, daß** das Hahnküken (12) eine von außen zugängliche Eingriffseinrichtung (17) aufweist, an die ein Drehwerkzeug (4) zum Drehen des Hahnkükens (12) ansetzbar ist.

4. S-Anschlußeinrichtung nach Anspruch 3, **dadurch gekennzeichnet, daß** die Eingriffseinrichtung (17) eine Rasteinrichtung (18) aufweist, die zum lösbaren Verriegeln mit dem Drehwerkzeug (4) ausgebildet ist.

5. S-Anschlußeinrichtung nach Anspruch 3 oder 4,
**dadurch gekennzeichnet, daß** die Eingriffseinrichtung (17) gegen den Strömungsweg abgedichtet ist.

6. S-Anschlußeinrichtung nach Anspruch 1 oder 2,
**dadurch gekennzeichnet, daß** ein Drehwerkzeug zum Drehen des Hahnkükens drehfest mit dem Hahnküken umspritzt ist.

7. S-Anschlußeinrichtung nach einem der Ansprüche
2 bis 6, **dadurch gekennzeichnet, daß** die Verdreheinrichtung (4, 17) an der Kegelspitze des Hahnkükens (12) angreift.

8. S-Anschlußeinrichtung nach einem der vorhergehenden Ansprüche, **dadurch gekennzeichnet, daß** die Drehachse (16) des Hahnkükens (12) gegen die Achse des Einlasses (2) der Sanitäranschlußeinrichtung (1) um einen Winkel α geneigt ist, der geringer ist als 45 °.

## Claims

1. A sanitary S-type connection device for connecting a sanitary fitting to a feedline of a building comprising an inlet (2), an outlet (3) and a control valve arranged in the fluid path between the outlet and the inlet in such manner that in the closed state of the control valve (11) the fluid connection between portions of the fluid path communicating under an obtuse angle is interrupted,
**characterized in that**
the control valve (11) comprises: A rotary plug being formed with an inlet opening (13) and an outlet opening (14), the inlet opening and the outlet opening (14) being of essentially same diameter as the openings (13, 14) of adjacent fluid path portions (7, 8); and **in that** rotary drive means (4, 17) co-operating with the plug (12) are provided which are accessible from outside and are sealed with respect to the fluid path (6).

2. The S-type connection device of claim 1, **characterized**
**in that** the plug (12) of the valve is of conical shape.

3. The S-type connection device in accordance with claim 1 or 2 **characterized in that** the plug (12) of the valve has positive coupling means (17) which are accessible from the outside and to which a rotating tool (4) for rotating the plug (12) can be coupled.

4. The S-type connection device of claim 3, **characterized in that** the positive coupling means (17) is formed with detent means (18) formed so as to allow removable latching by means of the rotating tool (4).

5. The S-type connection device in accordance with claim 3 or 4, **characterized in that** the positive coupling means (17) is sealed with respect to the fluid path.

6. The S-type connection device of claim 1 or 2, **characterized in that** a rotating tool for rotating the plug is molded around the plug for common rotation.

7. The S-type connection device as in one of claims 2 to 6, **characterized in that** the rotating means (4, 17) engages the summit of the cone of the plug (12).

8. The S-type connection device as in one of the preceeding claims, **characterized in that** the axis of rotation (16) of the plug (12) is in inclined with respect to the axis of the inlet (2) of the sanitary fitting (1) by an angle α being smaller than 45°.

## Revendications

1. Dispositif de raccordement sanitaire the type S destiné pour connecter une pièce de robinetterie à un conduit d'alimentation d'un édifice comprenant une entrée (2), une sortie (3) et une vanne de contrôle (11) arrangée dans le passage du fluide s'étendant êntre l'entrée et la sortie de telle manière, que la vanne de contrôle (11) fermée le passage d'écoulement défini êntre des parties de passage définissant un angle obtus est interrompu
charactérisé, en ce que
la vanne de contrôle (11) comprend: un boisseau (12) rotatif ayant une ouverture d'entrée (13) et une ouverture de sortie (14), l'ouverture d'entrée (13) et l'ouverture de sortie (14) ayant les mêmes diamètres comme des parties (7, 8) du passage d'écoulement voisines aux ouvertures (13, 14); et en ce que des moyens de rotation (4, 17) agissant sur le boisseau (12) sont accessibles par l'extérieur et sont scellés par rapport au passage d'écoulement (6).

2. Dispositif de raccordement de type S selon la revendication 1, **caractérisé en ce que** le boisseau (12) est conique.

3. Dispositif de raccordement selon la revendication 1 ou 2, **caractérisé en ce que** le boisseau (12) comprend des moyens d'accouplage (17) accessibles de l'extérieur et susceptibles de recevoir un outil rotatif (4) en vue de tourner le boisseau (12).

4. Dispositif de raccordement de type S selon la revendication 3, **caractérisé en ce que** les moyens d'accouplement (17) sont formés avec des moyens d'arrêt (18) permettant un verouillage mobil à l'aide de l'outil rotatif (4).

5. Dispositif de raccordement de type S selon la revendication 3 ou 4, **caractérisé en ce que** les moyens d'accouplement (17) sont scellés par rapport au passage d'écoulement.

6. Dispositif de raccordement de type S selon la revendication 1 ou 2, **caractérisé en ce que** un outil rotatif prévu pour tourner le boisseau est moulé autour du boisseau pour former un seul corps rotatif.

7. Dispositif de raccordement de type S selon une quelconque des revendications 2 à 6, **caractérisé en ce que** les moyens rotatifs (4, 17) coopèrent avec le sommet du cône du boisseau (12).

8. Dispositif de raccordement de type S selon une quelconque des revendications précedentes **caractérisé en ce que** l'axe de rotation (16) du boisseau (12) est incliné par rapport à l'axe de l'entrée (2) du dispositif de raccordement sanitaire (1) par un angle α étant plus petit que 45°.
